# DEMANDE DE BREVET EUROPEEN

(11) **EP 1 933 433 A1**
(43) Date de publication de la demande: **18.06.2008**
(21) Numéro de dépôt: 06301249.6
(22) Date de dépôt: 13.12.2006
(51) Int. Cl.: H02G 1/06, H02G 1/10, H02G 15/26

(54) **Procédé pour éviter la pollution due à une éventuelle fuite d'huile contenue dans un câble électrique**

(71) Demandeur: Nexans, 75008 Paris (FR)
(72) Inventeur: Dardel, Boris, CH-2035 Corcelles Suisse (CH); Mattmann, John Peter, CH-2014 Bole Suisse (CH); Jaquenod, Laurent, CH-2017 Boudry Suisse (CH)
(74) Mandataire: Feray, Valérie

(57) **Abrégé**

L'invention concerne un procédé pour éviter la pollution due à une éventuelle fuite d'huile contenue dans un tronçon inutilisé de câble électrique de puissance (10), comportant les opérations suivantes :
- injection d'un liquide dans le câble dudit tronçon à partir de l'une de ses deux extrémités (16, 18); et
- rinçage du câble dudit tronçon à l'aide de ce liquide et récupération de ce liquide et de l'huile à l'autre des deux extrémités (16, 18) du tronçon.

Selon l'invention, cette opération ultérieure consiste en au moins une injection de gaz dans le câble à partir de l'une de ses deux extrémités (16, 18) et une récupération du liquide et de l'huile à l'autre des deux extrémités (16, 18) du tronçon.

## Description

La présente invention a pour objet un procédé pour éviter la pollution due à une éventuelle fuite d'huile contenue dans un tronçon inutilisé de câble électrique de puissance.

Les câbles électriques de puissance sont souvent enfouis dans le sol, à une profondeur telle qu'ils ne présentent pas de danger d'électrocution, ou posés directement au fond d'une étendue d'eau, par exemple une mer, une rivière ou un lac. Ces câbles peuvent ne plus être utilisés pour diverses raisons : vieillissement, claquage du câble, remplacement par un câble plus approprié (en cas d'agrandissement d'un quartier par exemple), évolution de la technologie, etc. Les câbles non utilisés sont le plus souvent abandonnés, enfouis dans le sol ou au fond d'une étendue d'eau.

Les câbles électriques de puissance à isolation papier contiennent depuis de très nombreuses années une huile dont la fonction est d'isoler électriquement le ou les conducteurs électriques des autres composants du câble, notamment de son écran extérieur. Les câbles non utilisés présentent donc un risque de pollution de l'environnement en cas de fuite de l'huile qu'ils contiennent.

La solution évidente pour supprimer le risque consiste à enlever les câbles non utilisés. Cependant, cette solution n'est pas toujours possible et peut être onéreuse car elle peut nécessiter de mobiliser des moyens importants, par exemple pour retirer un câble reposant au fond d'une étendue d'eau. L'opération peut aussi être compliquée ou même impossible, par exemple pour excaver un câble enterré en milieu urbain. L'opération présente également des risques car ces câbles non utilisés sont la plupart du temps âgés et une rupture du câble, donc une fuite de l'huile qu'ils contiennent, est à redouter.

Pour résoudre ce problème, le document de brevet EP 1 686 667 propose d'enlever l'huile contenue dans le câble inutilisé. Pour cela, un solvant est injecté dans le câble afin de le rincer ce qui a pour effet d'éliminer l'huile, au moins partiellement. Le solvant peut être, soit injecté de façon continue dans le câble pour le rincer, soit injecté et laissé dans le câble pendant un certain temps afin de dissoudre l'huile, l'opération étant répétée un certain nombre de fois, le câble étant ensuite rincé avec de l'eau selon la même procédure.

Cependant, il s'avère que ce procédé ne donne pas totale satisfaction. En effet, après sa mise en oeuvre, il peut rester du solvant et de l'huile mélangés à l'eau stagnant dans le câble. Les câbles présentent donc toujours un risque de pollution de l'environnement en cas de fuite du liquide qu'ils contiennent. Ce risque est certes moins important qu'initialement mais existe.

Pour résoudre ce problème, l'invention propose un procédé pour éviter la pollution due à une éventuelle fuite d'huile contenue dans un tronçon inutilisé de câble électrique de puissance, comportant les opérations suivantes :
- injection d'un liquide dans le câble dudit tronçon à partir de l'une de ses deux extrémités et
- rinçage du câble dudit tronçon à l'aide de ce liquide et récupération de ce liquide et de l'huile à l'autre des deux extrémités du tronçon,
procédé caractérisé qu'une opération ultérieure consiste en au moins une injection de gaz dans le câble à partir de l'une de ses deux extrémités et une récupération du liquide et de l'huile à l'autre des deux extrémités du tronçon.

Ledit gaz peut être de l'air ou de l'azote.

De préférence, l'opération d'injection de gaz est répétée plusieurs fois.

Et ledit gaz peut être injecté à des pressions décroissantes.

De préférence, ladite dernière opération est suivie d'au moins une injection de gaz dans le câble à partir de l'une de ses deux extrémités, une fois le liquide et l'huile récupérés à l'autre des deux extrémités du tronçon.

Ledit rinçage être suivi d'une injection d'un second liquide non polluant dans le câble.

De préférence, ledit second liquide non polluant est de l'eau.

Avantageusement, ledit premier liquide est un solvant.

Les opérations d'injection de solvant, de rinçage et de récupération de l'huile dissoute peuvent être répétées plusieurs fois.

De préférence, ledit solvant est un solvant organique et peut être de l'alcool isopropylique.

L'invention est décrite ci-après plus en détail à l'aide d'une figure représentant un mode de réalisation de l'invention. :
La figure 1 représente un câble électrique immergé au fond d'une étendue d'eau.
La figure 2 représente en coupe transversale un exemple de câble électrique de puissance.
La figure 3 illustre un dispositif permettant d'injecter un liquide ou un gaz dans un tel câble.

Sur la figure, un tronçon inutilisé 10 de câble électrique de puissance repose sur le fond 12 d'un lac 14. Le tronçon se termine à ses deux extrémités 16 et 18 à l'intérieur de deux chambres respectivement 20 et 22. Ces chambres permettent d'accéder aux deux extrémités 16 et 18 du tronçon de câble. Les extrémités 16 et 18 du tronçon 10 sont reliées au câble par deux raccords respectivement 24 et 26.

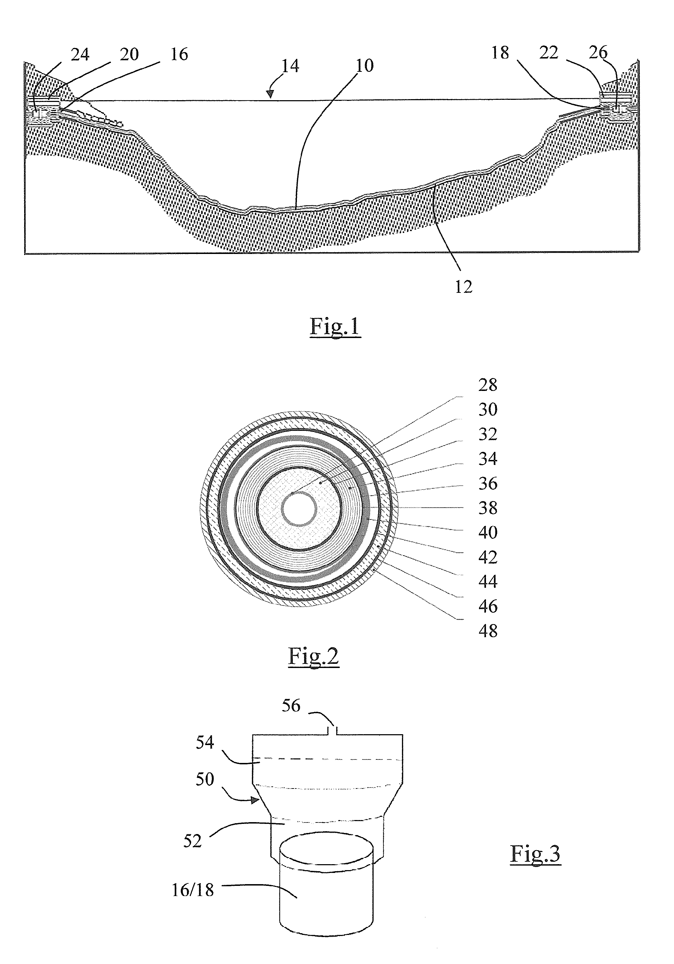

La figure 2 représente, en coupe, un câble électrique de puissance. Ce câble comporte de façon classique un conduit central 28 formé par une spirale. Un conducteur électrique 30, en cuivre ou en aluminium, entoure le conduit central. Puis, en partant du conducteur 30 vers l'extérieur, on trouve successivement un premier écran 32 du conducteur, une isolation électrique 34 réalisée en papier entourant l'écran 32, un deuxième écran 36, un ruban en coton métallisé 38 enroulé autour du deuxième écran, une gaine 40 réalisée en aluminium (ou en plomb ou en cuivre) ondulé sans soudure, un enrobage 42 en polyester et bitume, une gaine 44 en PVC ou en PE (polyéthylène), une autre gaine 46 en Nylon, et un enrobage 48 anti-termite lorsque le câble est destiné à être enterré dans le sol et une éventuelle armure métallique.

D'autres structures de câble existent, notamment des câbles à trois conducteurs pour le transport du courant triphasé. Ils contiennent également de l'huile comme isolant électrique et l'invention s'applique de la même façon à ces autres structures.

Une huile fluide, isolante électriquement, remplit le conduit central 28 et imprègne le papier de l'isolant 34. L'huile est en général minérale ou synthétique, du type couramment utilisé en électrotechnique. L'huile a pour fonction de contribuer, avec l'isolant papier 34, à l'isolation électrique du conducteur 30. Le conduit central, de diamètre compris par exemple entre 10 et 15 mm, est en communication avec des réservoirs d'expansion d'huile contenus dans les chambres d'extrémités 20 et 22. En cas de variations de température, l'huile peut ainsi fluer librement dans la partie centrale du câble sans créer une augmentation de pression dommageable pour le câble.

Selon l'invention, un liquide est injecté à l'une des deux extrémités 16 et 18 du tronçon de câble 10, à partir de l'une des deux chambres d'accès 24 et 26. Ce liquide peut être injecté en continu dans le câble et récupéré en continu à l'autre extrémité du tronçon de câble, dans l'autre chambre d'accès. Le câble est donc rincé par le liquide lequel entraîne l'huile, au moins en partie, hors du câble. Le liquide peut être par exemple de l'eau ou un solvant. Dans ce dernier cas, il est possible de laisser le solvant dans le câble pendant une certaine période de temps de façon à ce qu'il dissolve tout ou partie de l'huile, le solvant avec l'huile dissoute étant récupéré à l'autre extrémité du tronçon de câble à la fin de la période de temps. Le solvant utilisé doit être miscible avec l'huile, par exemple un solvant organique et plus spécialement de l'alcool isopropylique ou éthylique. Le solvant, avantageusement miscible à l'eau, est finalement remplacé dans le câble par un liquide non polluant, avantageusement de l'eau.

Selon une caractéristique essentielle de l'invention, une opération ultérieure consiste en au moins une injection de gaz dans le câble à partir de l'une de ses deux extrémités 16, 18 et une récupération du liquide et de l'huile à l'autre des deux extrémités 16, 18 du tronçon.

Ce gaz peut être par exemple de l'air avantageusement sec, de l'azote ou un autre gaz inerte non polluant.

Cette opération d'injection de gaz peut être répétée plusieurs fois.

La pression d'injection du gaz dépend de la longueur du câble et du liquide qui le remplit.

Cette opération d'injection de gaz peut être répétée plusieurs fois et le gaz est avantageusement injecté à des pressions décroissantes, à partir de quelques dizaines de bars.

Grâce à cette injection finale de gaz, la majeure partie du liquide, la majeure partie du solvant et la majeure partie de l'huile sont évacués. Seule reste un peu d'huile imprégnée dans le papier de l'isolant 34, qui ne pose pas de problème de pollution, ne pouvant s'écouler.

Une fois, le liquide, le solvant et l'huile évacués du câble, on continue avantageusement d'injecter du gaz dans le câble, afin de sécher les espaces précédemment remplis par évaporation du liquide et du solvant résiduels.

L'injection du solvant, et éventuellement d'un autre liquide et du gaz peut se faire par tous moyens appropriés, par exemple avec le dispositif illustré sur la figure 3. L'une des deux extrémités 16 ou 18 du câble est connectée de façon étanche à un récipient 50 ayant une forme cylindrique 52, pour la partie connectée au câble, suivie par une forme évasée 54. Le récipient est muni d'une ouverture 56 par laquelle un liquide ou un gaz peut être injecté, afin de remplir le récipient 50 et de se répandre à l'intérieur du câble, et plus spécialement dans le conduit central 28 et dans le papier de l'isolant 34. Le fluide peut être injecté sous pression ou par gravité.

L'avantage principal du procédé qui vient d'être décrit est de pouvoir laisser en place les câbles électriques inutilisés, tout en supprimant les risques de fuites de l'huile contenue dans ces câbles. La mise en oeuvre du procédé est relativement aisée, bon marché et sans risque comparée à l'opération qui consiste à retirer le câble.

## Revendications

1. Procédé pour éviter la pollution due à une éventuelle fuite d'huile contenue dans un tronçon inutilisé de câble électrique de puissance (10), comportant les opérations suivantes :
- injection d'un liquide dans le câble dudit tronçon à partir de l'une de ses deux extrémités (16, 18) et
- rinçage du câble dudit tronçon à l'aide de ce liquide et récupération de ce liquide et de l'huile à l'autre des deux extrémités (16, 18) du tronçon,
procédé **caractérisé qu'**une opération ultérieure consiste en au moins une injection de gaz dans le câble à partir de l'une de ses deux extrémités (16, 18) et une récupération du liquide et de l'huile à l'autre des deux extrémités (16, 18) du tronçon.

2. Procédé selon la revendication 1, **caractérisé en que** ledit gaz est de l'air.

3. Procédé selon la revendication 1, **caractérisé en que** ledit gaz est de l'azote.

4. Procédé selon l'une des revendications précédentes, **caractérisé en ce que** l'opération d'injection de gaz est répétée plusieurs fois.

5. Procédé selon la revendication précédente, **caractérisé en ce que** ledit gaz est injecté à des pressions décroissantes.

6. Procédé selon l'une des revendication précédente, **caractérisé en ce que** ladite opération ultérieure est suivie d'au moins une injection de gaz dans le câble à partir de l'une de ses deux extrémités (16, 18), une fois le liquide et l'huile récupérés à l'autre des deux extrémités (16, 18) du tronçon.

7. Procédé selon l'une des revendications précédentes, **caractérisé en ce que** ledit rinçage est suivi d'une injection d'un second liquide non polluant dans le câble.

8. Procédé selon la revendication précédente, **caractérisé en ce que** ledit second liquide non polluant est de l'eau.

9. Procédé selon l'une des revendications précédentes, **caractérisé en ce que** ledit premier liquide est un solvant.

10. Procédé selon la revendication précédente, **caractérisé en ce que** les opérations d'injection de solvant, de rinçage et de récupération de l'huile dissoute sont répétées plusieurs fois.

11. Procédé selon la revendication 9 ou 10, **caractérisé en ce que** ledit solvant est un solvant organique.

12. Procédé selon la revendication précédente, **caractérisé en ce que** ledit solvant est de l'alcool isopropylique.

## Revendications modifiées

### Revendications modifiées conformément à la règle 137(2) CBE.

**1.** Procédé pour éviter la pollution due à une éventuelle fuite d'huile contenue dans un tronçon inutilisé de câble électrique de puissance (10), comportant les opérations suivantes :
- injection d'un liquide dans le câble dudit tronçon à partir de l'une de ses deux extrémités (16, 18) et
- rinçage du câble dudit tronçon à l'aide de ce liquide et récupération de ce liquide et de l'huile à l'autre des deux extrémités (16,18) du tronçon, procédé **caractérisé qu'**une opération ultérieure consiste en au moins une injection de gaz dans le câble à partir de l'une de ses deux extrémités (16, 18) et une récupération du liquide et de l'huile à l'autre des deux extrémités (16, 18) du tronçon.

**2.** Procédé selon la revendication 1, **caractérisé en que** ledit gaz est de l'air.

**3.** Procédé selon la revendication 1, **caractérisé en que** ledit gaz est de l'azote.

**4.** Procédé selon l'une des revendications précédentes, **caractérisé en ce que** l'opération d'injection de gaz est répétée plusieurs fois.

**5.** Procédé selon la revendication précédente, **caractérisé en ce que** ledit gaz est injecté à des pressions décroissantes.

**6.** Procédé selon l'une des revendication précédente, **caractérisé en ce que** ladite opération ultérieure est suivie d'au moins une injection de gaz dans le câble à partir de l'une de ses deux extrémités (16, 18), une fois le liquide et l'huile récupérés à l'autre des deux extrémités (16, 18) du tronçon.

**7.** Procédé selon l'une des revendications précédentes, **caractérisé en ce que** ledit rinçage est suivi d'une injection d'un second liquide non polluant dans le câble.

**8.** Procédé selon la revendication précédente, **caractérisé en ce que** ledit second liquide non polluant est de l'eau.

**9.** Procédé selon l'une des revendications précédentes, **caractérisé en ce que** ledit premier liquide est un solvant.

**10.** Procédé selon la revendication précédente, **caractérisé en ce que** les opérations d'injection de solvant, de rinçage et de récupération de l'huile dissoute sont répétées plusieurs fois.

**11.** Procédé selon la revendication 9 ou 10, **caractérisé en ce que** ledit solvant est un solvant organique.

**12.** Procédé selon la revendication précédente, **caractérisé en ce que** ledit solvant est de l'alcool isopropylique.
